Europäisches Patentamt

(19) European Patent Office

Office européen des brevets

(11) Publication number: **0 027 389**
**A1**

(12) **EUROPEAN PATENT APPLICATION**

(21) Application number: 80303646.6

(22) Date of filing: 15.10.80

(51) Int. Cl.³: **G 01 N 25/72**

(30) Priority: 16.10.79 US 85370

(43) Date of publication of application:
22.04.81 Bulletin 81/16

(84) Designated Contracting States:
BE FR GB IT

(71) Applicant: WESTINGHOUSE ELECTRIC CORPORATION
Westinghouse Building Gateway Center
Pittsburgh Pennsylvania 15222(US)

(72) Inventor: Greenhalgh, Wilbur Orme
1950 Jones Road
Richland Washington(US)

(72) Inventor: Green, Donald Ralph
2020 Davison Avenue
Richland Washington(US)

(72) Inventor: Wandling, Clarence Raymond
506 North Irving
Kennewick Washington(US)

(74) Representative: van Berlyn, Ronald Gilbert
23, Centre Heights
London, NW3 6JG(GB)

(54) Non-destructive process for determining physical state of materials within sealed container.

(57) A non-destructive thermal imaging method for detecting the presence of a liquid such as water within a sealed container (10). The process includes application of a low amplitude heat pulse to an exterior surface area of the container, terminating the heat input and quickly mapping the resulting surface temperatures. The various mapped temperature values can be compared with those known to be normal for the container material and substances in contact. The mapped temperature values show up in different shades of light or darkness that denote different physical substances. The different substances can be determined by direct observation or by comparison with known standards. In the past, destructive testing methods have been used which were slow and resulted in exposed solid waste that must be re-contained prior to disposal. The non-destructive method permits quick and accurate detection of the presence of free liquid in sealed containers.

FIG 1

1

# NON-DESTRUCTIVE PROCESS FOR DETERMINING PHYSICAL STATE OF MATERIALS WITHIN SEALED CONTAINER

The present invention relates to non-destructive external sensing of the presence and physical characteristics of materials within a sealed container by observing or measuring thermal conduction characteristics of the container walls.

Low level radioactive liquid waste is generated in virtually every portion of the nuclear industry. In the early 1970's, the United States Atomic Energy Commission manual on Radioactive Waste Management and state licensing requirements were provided to insure that all low level liquid wastes would either be (1) solidified, (2) retained within high level liquid waste, or (3) be cleaned up and discharged with radio nuclide contents below the Maximum Permissible Concentration (MPC). Nearly all wastes are presently solidified, sealed in metal drums, and disposed of.

At the present time, the United States Nuclear Regulatory Commission requires nuclear facility license applicants to specify the method to be used to solidify or process radioactive liquid wastes to be generated. In addition, the standard review plan for reactors, Part II-a (Acceptance Criteria) requires that "...All wet solid wastes will be solidified prior to shipment off site and there are provisions to verify the absence of free liquid in the containers..."

2

Liquid wastes are presently solidified using three different matrixes, cement, urea-formaldehyde (UF) or bitumen. During cement solidification of liquid waste, enough water is added to a mixture of the liquid waste and cement to physically mix the components into a smooth paste or slurry. Excessive water content in the mixture can result in free water forming out of the mixture upon solidification. Cement is denser than water, so the cement will settle to the bottom of the container, forcing any appreciable amount of free liquid to the surface.

Urea-formaldehyde (UF) is generally combined with liquid waste in the volume ratio of one part resin to two parts liquid waste, plus two volume percent of catalyst. However, compositions up to approximately 3.5 volumes of waste per volume of (UF) resin have been used. The UF, upon setting, generally exhibits formation of some free liquid (0.50 to 1.50 volume percent).

The bitumen solidification process employs relatively high temperatures and generally free liquid will evaporate prior to solidification. In general, free liquid formation does not occur unless organic liquids or oils are present in liquid waste, or the evaporation step fails to remove all of the water.

Industry has developed standards specifying the present industry guidelines for solidifying low level radioactive liquid waste and verifying the absence of free liquid within the solidified liquid waste. Specifically N14.9.1. describes a method of visual examination and extensive internal sectioning and examination of representative drums of the solid. Any appreciable change in formulation of the solidification process requires new testing.

The destructive testing of a small number of representative solidified waste samples, because of their highly variable nature, cannot accurately verify the presence or nonpresence of liquids within the sealed solid waste containers. Furthermore, the destructive testing process is typically slow and results in exposed solid waste that must be re-contained prior to disposal.

It therefore becomes desirable to perform some form of non-destructive examination of sealed containers to quickly and accurately detect the presence of free liquid therein.

Various methods have been proposed and utilized for non-destructive testing of various materials, particularly for detecting structural defects. One practical sensing technique involves the use of thermal conductivity.

For example, United States Patent No. 3,945,245 granted to Stehle et al discloses a method and mechanism for detecting defective nuclear fuel rods in which leakage within the rods is ascertained by ultrasonic reflection measurements, or by measurement of a temperature vs. time curve. The method steps involve basically the application of heat to the end portions of closely interspaced fuel rods and subsequently detecting possible water inside of the fuel rods by measuring a "power" transmitted through the end caps that has a value responsive to the conduction of heat. The time required for a specific amount of heat to be transferred from spaced positions on the fuel rod is related to the time required, under similar conditions, for heat to be transferred through a dry rod. The shape of the time-temperature curve can also be related to the volume of water contained within the fuel rod.

The Stehle time-temperature method of detecting free liquid may well be serviceable, but is rather time consuming. For example, use of such a method for repeatedly testing closed nuclear waste containers for free liquid content would be time prohibitive and inefficient. Such containers are very large in comparison to the relatively small diameter of a nuclear fuel rod. The water contained therein may therefore be spread over a large surface area with a relatively large volume of air also in contact therewith. Transfer of heat from a point below the free water to an end of the drum would be too slow unless the temperature could be increased to above acceptable levels.

United States Patent No. 3,791,194 to Pontello describes a filter testing arrangement whereby hollow, substantially cylindrical fuel filters are inspected for faults. A thermal scanning method is used with heated air being passed through the filter. An infrared scanner is used for sensing temperature of the outer surface of the fuel filter. Any non-uniform high temperatures detected on the surface of the filter indicate that the filter is faulty.

United States Patent No. 3,629,584 to Oscar C. Blomgren, Jr. discloses a method and apparatus for non-destructive testing of materials. The method involves heating of the specimen, subjecting it to an extremely high voltage (10,000 to 250,000 volts D.C.) electrostatic field and monitoring uniformity of a coding corona formed by the field about the object. Faults or flaws are concentrated upon by the field corona and cool more quickly than the remainder of the specimen. The method is intended for non-destructive testing of castings and forgings of a single material. Blomgren requires both heating (preferably to incandescence) and forced cooling, through use of the corona, before surface flaws or foreign matter inclusion can be distinguished. Extremely high operating voltages and high temperature test objects become considerable safety hazards.

The present process requires only the heating step and at that, only heating of the object to slightly higher than ambient temperatures is required. No high voltage, ozone producing, cooling corona is required since detection is determined by heat absorption rather than cooling rates.

It is the primary object of this invention to provide an improved non-destructive process for determining the physical state of materials within a sealed container, with a view to overcoming the deficiencies of the prior art.

The invention resides in a non-destructive process for determining the physical state of materials within a sealed container, having heat conductive exterior walls, characterized in that said process comprises: applying heat to an exterior surface area of the container for a predetermined time, the rate of application and time being such as to have a negligible effect on materials within the container; terminating the application of heat; mapping the resulting transient surface temperatures about the surface area at a time briefly following such termination; measuring any differences in the mapped transient surface temperatures about the surface area; and comparing any measured differences in the mapped transient surface temperatures with known differences in thermal conductivity of the various physical states of the materials comprising the container contents in contact with its corresponding interior surface area.

The invention will become readily apparent from the following description of exemplary embodiments thereof when read in conjunction with the accompanying drawings, in which:

Fig. 1 is a diagrammatic representation of the apparatus used to carry out the present method wherein a thermal image is sensed by infrared scanning;

Fig. 2 is a graphic representation of a thermal image produced by infrared scanning of a heated container surface;

Fig. 3 is a diagrammatic representation of the apparatus used for the present method wherein the thermal image is produced by and sensed by a temperature sensitive transducer;

Fig. 4 is a graphic representation of a thermal image produced by the temperature sensitive transducer;

Fig. 5 is a time-temperature curve illustrating computed drum surface temperature rises for drums containing urea-formaldehyde waste during thermal non-destructive testing;

Fig. 6 is a graph similar to Fig. 5 only showing the curve for asphalt waste; and

Fig. 7 is a graph similar to Fig. 5 only showing the curve for cement waste.

The present invention allows accurate testing for free liquid within sealed containers as, for example, the type of sealed drum utilized in disposal of nuclear waste materials. Basically, the present method is performed by mapping transient heat values along an exterior surface of the drum and by comparing differences of mapped transient surface temperatures against known values for ideal (dry) conditions to determine liquid content.

The present invention is applicable to many areas of industry but has particular adaptability in non-destructive testing for liquid content within sealed nuclear waste storage drums 10. Such drums are from 30 to 55 gallon steel containers that are sealed tightly for disposal. The contents of the drums (nuclear waste) is typically introduced in liquid form. Some solidifying agent must then be applied for the purpose of solidifying the waste material. Should perforation of the container occur, no liquid will seep through and spread to the adjacent environment.

The present method is effective for detecting presence of liquid (usually water) contacting a surface of the drum. The liquid may be found within pockets formed within the solidified material and engaging a drum surface, or free along a top surface of the solid material and in contact with the drum walls or ends.

The present method can be performed effectively by infrared scanning of heated container surfaces or by thermal imaging using a thermal sensitive transducer such as disclosed in United States Patent No. 3,672,204 (relevant portions thereof being incorporated by reference in the present application).

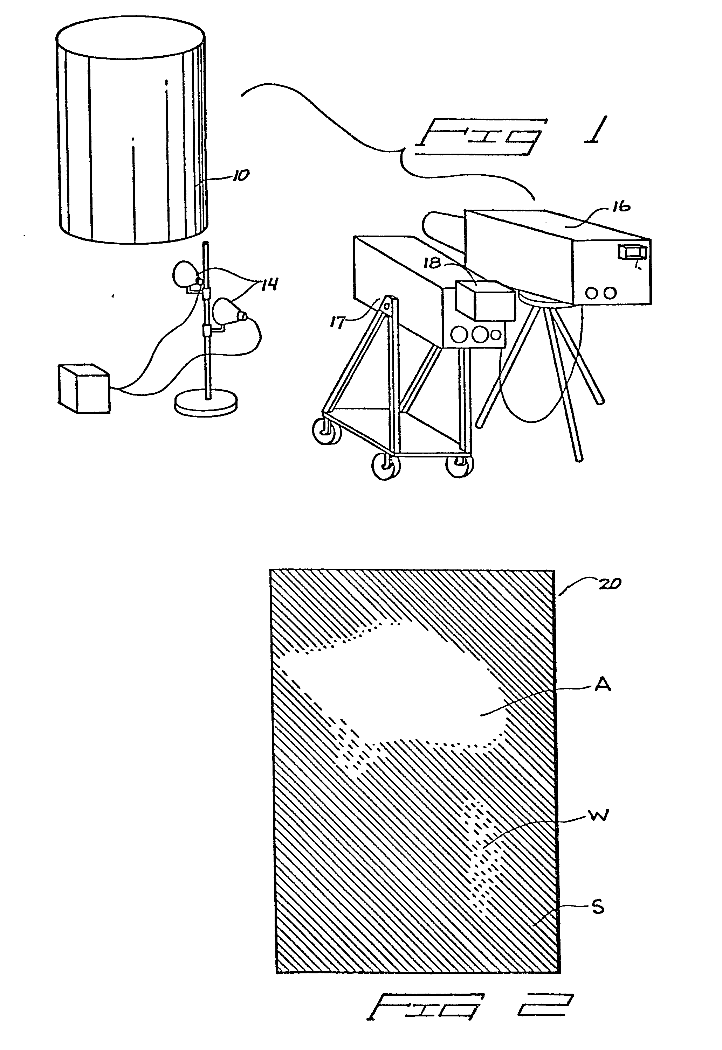

Fig. 1 illustrates the apparatus utilized for infrared scanning embodiment of the present method. Here, a drum exterior surface is heated by a heat source 14 such as infrared lamps or by a warm gas stream. After the lamps have heated the surface for a prescribed time, for example, one to five minutes, the heat is discontinued. Shortly after discontinuing the heat, the heat values across the heated exterior drum surface are mapped by an infrared scanning camera 16. The infrared scanner can produce a video signal from the mapped surface and transmit it to an oscilloscope 17. The resulting oscilloscope image is displayed on the scope screen.

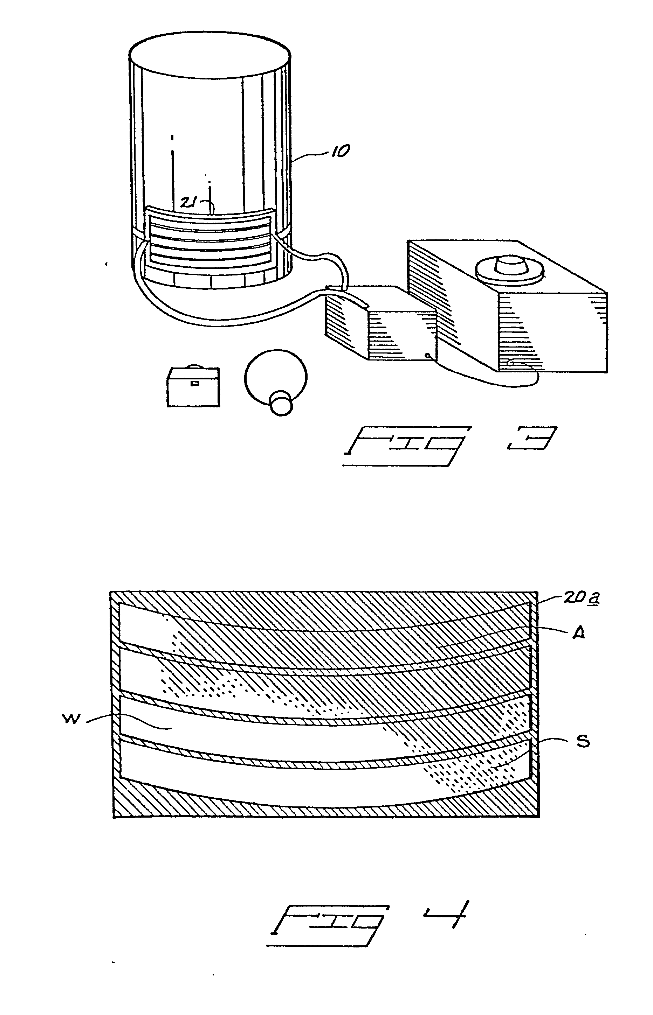

A camera 18 may be provided adjacent the screen to produce a permanent record (Photo 20) of the image (Fig. 2). Commercial equipment is presently available, as an alternative, for displaying the image directly on a standard television screen (not shown).

A comparison can then be made of the mapped transient surface temperatures on the recorded image and known "images" representing standard thermal conductivity through the materials comprising the container contents. In fact, warm areas on the waste storage drum appear as bright areas "A" (air pockets) while cooler regions will appear darker in varying degrees (water "W" being lighter than solids "S"). Comparison of the various image shades with known shade values produced as a result of the physical status of adjacent material will result in an accurate determination of the physical quality of the container contents. Additionally, the time transient behavior of the surface thermal image can be interpreted to give further information about the contents.

The second thermal imaging technique requires use of a thermally sensitive transducer 21 as described in the above referenced patent. The thermal imaging transducer 21 utilizes a thermally sensitive phosphor painted on the back of thin metal foil heating elements. The elements are backed with a transparent flexible blanket containing vacuum channels. Application of vacuum through the channels causes the transducer to be held firmly on the drum and in intimate contact with the surface being tested. A thin layer of plastic is preferably placed outside of the foil to electrically insulate it from the drum 10.

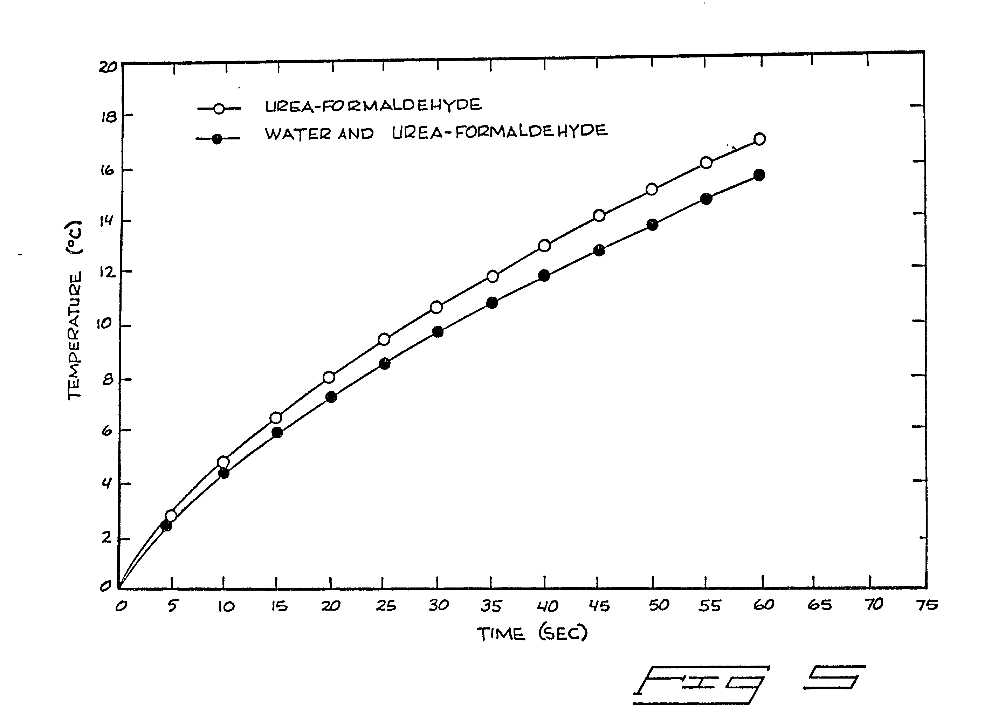

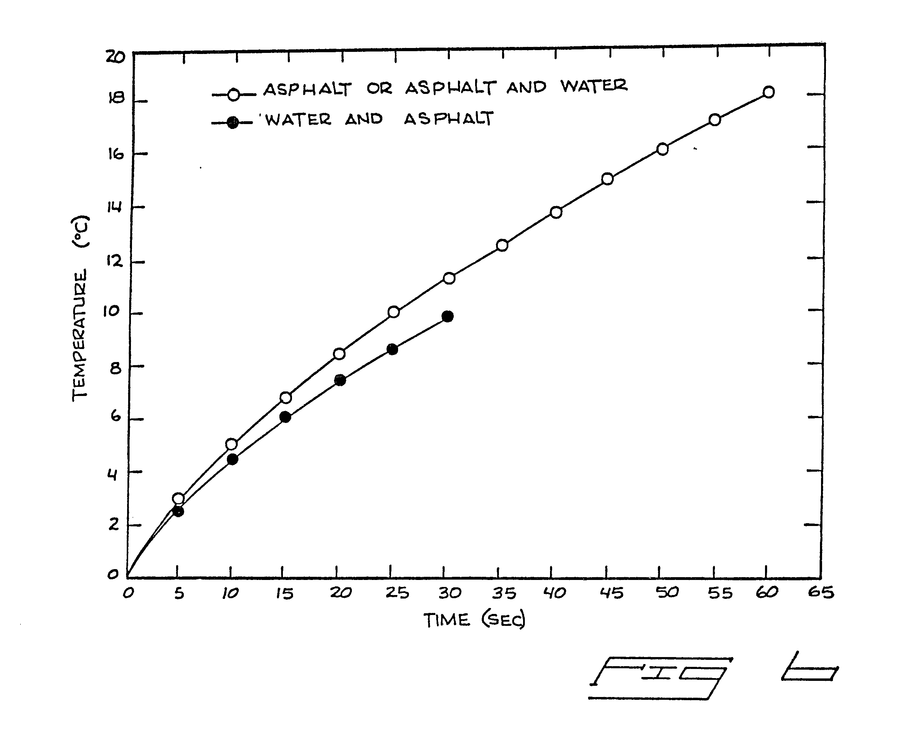

After the transducer has been placed on the drum, heat is produced by passing an electric current through the foil. After heating, ultraviolet rays are directed against the thermally sensitive phosphor coating and the resulting image is photographed, producing photo 20a (Fig. 4). The phosphor will fluoresce brightly in cool regions (water "W") of the heated surface and will appear to be darker (air "A" and solids "S") by varying degree in warmer regions. In this way, a thermal image similar to that produced with the infrared scanner is obtained, except that the image tones are reversed from the infrared version. Distinction by comparison of the mapped transient temperatures with known conductivity values is accomplished in the same manner as with infrared scanning.

In one experimental situation, a small amount of water was detected within a thirty gallon steel drum. A thermal image of the water found in contact with the drum wall was viewed through the back of the transducer 21 approximately two seconds after injecting 0.6 calories/sec-cm$^2$ heat into the transducer foil for fifteen seconds. The two second time delay between termination of heating and photographing the image was purposely used to eliminate the effect of variations in thermal contact resistance between the transducer and the drum surface.

In similar situations with surface water in relatively small amounts, it is preferable that the drum be tilted so that the liquid may be more easily detected. The drum is tilted parallel to the length of the transducer. This concentrates the liquid at one drum side, making it easier to detect. If the drum angle is adjusted until the liquid just reaches the top edge of the drum, then the amount of contained liquid can be calculated as being $\pi r^2 d/2$ where "d" is the depth of liquid on the bottom or opposite edge.

The same experiment was conducted with infrared scanner techniques. Similar results were obtained with the exception that bright and dark areas of the image were reversed due to the "negative" produced through the scanner and oscilloscope.

In another experiment a one gallon can was utilized, containing asphalt simulated waste and a side void filled with water. The thermal transducer was utilized and the image produced was photographed three seconds after injecting 0.13 calories/sec-cm$^2$ heat input for 135 seconds. The resulting image indicated the location of the water as a large bright spot on the photograph.

A similar and equally successful experiment with the transducer 21 was conducted utilizing cement immobilized waste. In this instance the image was photographed three seconds after injecting 0.35 calories/sec-cm$^2$ input for 60 seconds.

A test conducted with the transducer 21 on urea formaldehyde waste specimens produced successful results, but distinguishable differences in the image between the "UF" and other liquid in the container were found to be not quite as pronounced as with the other forms of waste solidifying agents. The UF produces a light gray image which can be distinguished as UF material over water or other liquid which produces a bright spot on the image. The photograph in this instance was taken one second after passing 0.25 calories/sec-cm$^2$ thermal energy into the can surface for 60 seconds.

Computer methods for determining heat conductance characteristics may be used successfully for automatically comparing values to detect presence of liquid within the sealed containers.

Computations by applicants were completed using a standard finite difference approach and constants used in the computation (thermal conductivity, specific heat, and density) were determined experimentally from samples made of the respective waste solids.

Temperature transients were computed for asphalt, cement, and urea-formaldehyde solidification media during thermal non-destructive testing using a digital computer. These computations assumed a heat input of 0.1 calorie/sec-cm$^2$ and were based on laboratory measured thermal properties. The heat conductivity values used for the three solidifying media and other properties upon which the temperature computations were based are given in the following table:

TABLE 1

THERMAL PROPERTIES AND DENSITY OF
SOLID-BOUND SIMULATED NUCLEAR WASTES

| Material Composition | Thermal Conductivity (cal/sec-cm$^2$-°C) | Specific Heat (cal/g-°C) | Density (g/cm$^3$) |
|---|---|---|---|
| 65% Cement, 26% $H_2O$ 9% $Na_2SO_4$ | 0.0021 | 0.22 | 2.7 |
| 57% Asphalt, 43% $Na_2SO_4$ | 0.00044 | 0.98 to 1.15 | 1.4 |
| 28% Urea-formaldehyde, 69% $H_2O$, 3% Catalyst | 0.00126 | 0.70 | 1.1 |

Heat transients on the outer drum surface receiving the thermal radiation were computed using heat conductivities of the thermal image transducer, the steel waste drum, the waste components, and the liquid that might be present.

11

The following Table 2 gives the maximum temperatures computed for the programmed temperature rises:

- 12 -

## TABLE 2

COMPUTED TEMPERATURE RISE FOR VARIOUS CONTAINED LIQUID-WASTE
SYSTEMS (POINT OF HIGHEST TEMPERATURE MEASURED)

Run No. 1 - Rubber, Steel, Water, Asphalt

| Time (sec) | 5 | 10 | 15 | 20 | 25 | 30 |
|---|---|---|---|---|---|---|
| Temp ($^0$C) | 2.64 | 4.49 | 6.04 | 7.41 | 8.65 | 9.80 |

Run No. 2 - Rubber, Steel, Asphalt, Water

| Time (sec) | 5 | 10 | 15 | 20 | 25 | 30 |
|---|---|---|---|---|---|---|
| Temp ($^0$C) | 2.89 | 5.02 | 6.84 | 8.46 | 9.94 | 11.31 |

| Time (sec) | 35 | 40 | 45 | 50 | 55 | 60 |
|---|---|---|---|---|---|---|
| Temp ($^0$C) | 12.59 | 13.81 | 14.96 | 16.06 | 17.11 | 18.12 |

Run No. 3 - Rubber, Steel, Water, Cement

| Time (sec) | 5 | 10 | 15 | 20 | 25 | 30 |
|---|---|---|---|---|---|---|
| Temp ($^0$C) | 2.64 | 4.49 | 6.04 | 7.40 | 8.63 | 9.77 |

Run No. 4 - Rubber, Steel, Cement

| Time (sec) | 5 | 10 | 15 | 20 | 25 | 30 |
|---|---|---|---|---|---|---|
| Temp ($^0$C) | 2.69 | 4.60 | 6.20 | 7.61 | 8.89 | 10.07 |

- 14a -

TABLE 2 (continued)

COMPUTED TEMPERATURE RISE FOR VARIOUS CONTAINED LIQUID-WASTE
SYSTEMS (POINT OF HIGHEST TEMPERATURE MEASURED)

Run No. 5 - Rubber, Steel, Asphalt

| Time (sec) | 5 | 10 | 15 | 20 | 25 | 30 |
|---|---|---|---|---|---|---|
| Temp ($^o$C) | 2.89 | 5.02 | 6.84 | 8.46 | 9.94 | 11.31 |

| Time (sec) | 35 | 40 | 45 | 50 | 55 | 60 |
|---|---|---|---|---|---|---|
| Temp ($^o$C) | 12.59 | 13.81 | 14.96 | 16.06 | 17.11 | 18.13 |

Run No. 6 - Rubber, Steel, Urea-Formaldehyde

| Time (sec) | 5 | 10 | 15 | 20 | 25 | 30 |
|---|---|---|---|---|---|---|
| Temp ($^o$C) | 2.78 | 4.79 | 6.49 | 7.99 | 9.36 | 10.62 |

| Time (sec) | 35 | 40 | 45 | 50 | 55 | 60 |
|---|---|---|---|---|---|---|
| Temp ($^o$C) | 11.79 | 12.91 | 13.96 | 14.97 | 15.93 | 16.85 |

Run No. 7 - Rubber, Steel, Water, Urea-Formaldehyde

| Time (sec) | 5 | 10 | 15 | 20 | 25 | 30 |
|---|---|---|---|---|---|---|
| Temp ($^o$C) | 2.64 | 4.49 | 6.04 | 7.40 | 8.64 | 9.78 |

| Time (sec) | 35 | 40 | 45 | 50 | 55 | 60 |
|---|---|---|---|---|---|---|
| Temp ($^o$C) | 10.85 | 11.86 | 12.82 | 13.74 | 14.62 | 15.47 |

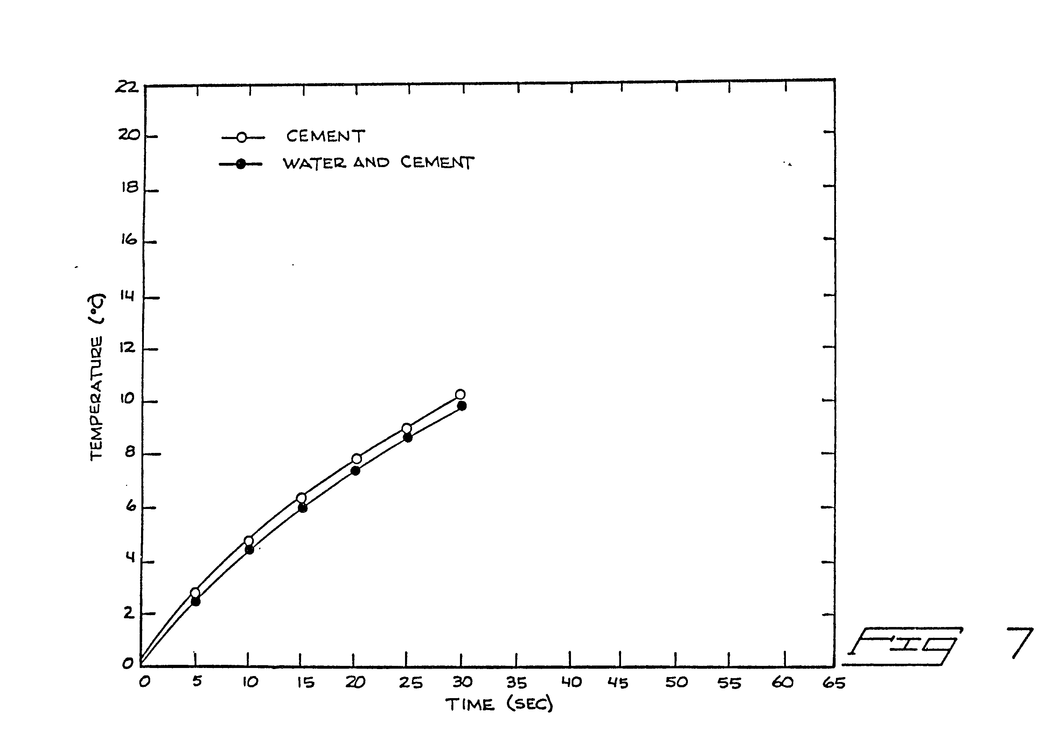

Graphs showing the transient temperature differences between the pure solidified waste and a small layer of liquid between the wall and the solid waste are given in Figures 5, 6, and 7 for the three matrices: urea-formaldehyde, asphalt and cement respectively. The results indicate significant temperature differences between the sample with free liquid and the solid waste samples, except for cement. Actual experimental evidence as described earlier for cement, however, demonstrates that there is sufficient difference between cement and water to detect free liquid in cemented waste.

It is to be understood that the above description is given by way of example to set forth a preferred manner of performing the present process for non-destructive testing for presence of liquid in sealed containers. The process may be performed equally as effectively to detect or distinguish the physical character of components engaging a heat conductive surface in many other applications. The breadth of the present invention is therefore more closely set forth by the following claims.

14

What we claim is:

1. A non-destructive process for determining the physical state of materials within a sealed container, having heat conductive exterior walls, characterized in that said process comprises: applying heat to an exterior surface area of the container for a predetermined time, the rate of application and time being such as to have a negligible effect on materials within the container; terminating the application of heat; mapping the resulting transient surface temperatures about the surface area at a time briefly following such termination; measuring any differences in the mapped transient surface temperatures about the surface area; and comparing any measured differences in the mapped transient surface temperatures with known differences in thermal conductivity of the various physical states of the materials comprising the container contents in contact with its corresponding interior surface area.

2. The process as defined in claim 1 wherein the mapping of the transient surface temperature includes the step of engaging a thermal transducer with the exterior surface area and wherein the step of applying heat to the engaged exterior surface is accomplished by producing heat within the transducer by a metal foil heating element.

3. The process as defined in claim 2 wherein ultraviolet light is directed against a thermally sensitive phosphor painted on the back of the metal foil heating element, followed by detecting variations in the resulting reflections and correlating the resulting reflections with similar reflections representing the physical nature of materials known to produce such reflections.

4. The process as defined in claim 1 wherein the step of applying heat to the exterior surface area is accomplished by directing a source of radiant heat of known value toward the surface area for a prescribed time.

5. The process as defined in claim 1 wherein the step of mapping the resulting transient surface temperature is accomplished by producing a thermal image of the transient surface temperature; and permanently recording the image with an image recording device.

FIG 1

FIG 2

45

10

21

FIG 3

20a

A

W

S

FIG 4

FIG 5

FIG 7

FIG 7

0027389

**European Patent Office**

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | I.E.E.E. TRANSACTIONS ON INDUSTRIAL ELECTRONICS AND CONTROL INSTRUMENTATION, vol. IECI-20, no. 4, November 1973 NEW YORK (US) B. STIEFELD et al.: "Evaluation of large carbon composite cones using thermal transducer" pages 197-200 * Page 197 * | 1-3 | G 01 N 25/72 |
| A | US - A - 4 083 223 (M. HASHIMOTO) * Abstract, column 1, lines 38-68; figure 2 * | 1,5 | TECHNICAL FIELDS SEARCHED (Int. Cl.³) |
| A | US - A - 3 864 958 (D.R. DREITZLER) * Column 1, lines 5-45; figure 4, figure 5 * | 1,5 | G 01 N 25/72 |
| A | US - A - 3 819 943 (K. ISHIBASHI) * Column 1 * | 1 | |
| A | GB - A - 1 287 114 (H. PARKER) * Page 1, claims * | 1 | |
| A | US - A - 3 457 770 (R.M. SCHROEER) * Abstract * | 1 | |
| A | FR - A - 1 289 255 (KELVIN AND HUGHES) * Abstract * | 1 | |
| D,A | US - A - 3 945 245 (H. STEHLE) * Column 1, lines 54-68; column 2, lines 26-49 * | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-01-1981 | CALLEWAERT-HAEZ |

EPO Form 1503.1  06.78